# EUROPEAN PATENT SPECIFICATION

(11) **EP 2 025 965 B1**
(45) Date of publication and mention of the grant of the patent: **09.06.2010**
(21) Application number: 08162499.1
(22) Date of filing: 18.08.2008
(51) Int. Cl.: F16D 65/12

(54) **Brake Disc Assembly**
Bremsscheibenanordnung
Ensemble de disque de frein

(30) Priority: 16.08.2007 GB 0715968
(43) Date of publication of application: 18.02.2009
(73) Proprietor: Saunders, Walter Emil, German Isle of Man IM5 2AQ (GB)
(72) Inventor: Saunders, Walter Emil, German Isle of Man IM5 2AQ (GB)
(74) Representative: Gillam, Francis Cyril

(56) References cited:
- WO-A-98/13622
- DE-A1- 3 216 108
- DE-A1- 19 648 582

## Description

This invention relates to a brake disc assembly and in particular, though not exclusively, to such an assembly suitable for use on the front wheel of a motorcycle and especially on a motorcycle intended for race use.

In the following, reference will be made primarily to brake disc assemblies for motorcycles in view of the intended application of the invention. Despite this, it will be appreciated that the invention could find other applications and so is not to be regarded as limited to motorcycle disc brakes.

Disc brake assemblies for motorcycles are extremely well known. A disc is secured to the wheel hub, or occasionally the wheel itself, and a calliper is mounted (in the case of a front wheel) on a fork leg or (in the case of a rear wheel) on a swing arm or other suspension component, with the disc running between brake pads within the calliper. Frequently, a "floating disc" is employed where the disc is not rigidly secured to the wheel, but is allowed a small degree of axial freedom to allow the disc precisely to align with the calliper.

On racing motorcycles, it can be necessary rapidly to change the wheels to provide new tyres and the current practice is to fit a new wheel that has one or two discs pre-assembled to it. It is however advantageous to continue to use the same disc that was previously in use so that full brake performance is immediately available to the rider.

There is thus a need for an arrangement whereby a disc may readily be removed from a wheel and replaced on another, in order that braking efficiency might be maintained. Proposals for designs that appear to be readily removable are to be found in EP0983451 and DE3216108. However, in the case of EP0983451, due to the limited axial clearance between the disc and calliper on a motorcycle, it may not be possible to place the retaining ring on the outside face of the disc, making it difficult or impossible to remove the disc rotor without removing the complete assembly. In the case of DE3216108, it is not possible to remove the retaining clip without specialist tools.

It is a principal aim of this invention to provide a disc brake assembly which is relatively easy to manufacture, and which has a locking arrangement for the disc which is easy to operate and so the removal of the disc for replacement by another is quick to perform.

According to this invention, there is provided a brake disc assembly comprising:
- a carrier for mounting on a wheel and including a plurality of angularly-spaced outwardly-projecting arms each defining from the outer end thereof an inwardly directed slot extending through the arm, each arm being provided with an inwardly-opening part-circular groove intersecting the associated slot;
- an annular brake disc including a plurality of inwardly projecting lugs each receivable in a corresponding slot of the carrier by relative axial movement of the disc and carrier, at least some of the lugs having a lug groove formed in the radially-inwardly facing surface of the lug such that when the lugs of the disc are engaged in the slots of the carrier, each lug groove is aligned with the carrier grooves; and
- a circularly-formed split resilient locking member having the two ends thereof adjacent each other, which locking member is receivable in the aligned grooves of the carrier and brake disc to hold the disc engaged with the carrier, the locking member being removable from the grooves by inward deformation of the locking member from one end thereof.

It will be appreciated that with this invention, by having angularly spaced arms on the carrier, access to the locking member can be gained between the arms. Thus, it becomes possible to apply inward force to the locking member - which is in the form of a split ring, to deform that member inwardly from one end thereof. In this way, the member may be released sequentially from the aligned grooves of the carrier and brake disc. Once done, the annular brake disc is free to move in the axial direction, out of engagement with the carrier and so be free of the wheel on which the carrier is mounted. Re-assembly of a new disc is equally easy to perform; the lugs of the disc are engaged with the corresponding slots of the carrier by relative axial movement, whereafter the split locking member is fitted back from one end thereof into the aligned grooves.

It is highly preferred that when the locking member is fitted to both the carrier and brake disc, it is restrained against turning movement with respect to the carrier and disc. Advantageously, this is achieved by having only one of the lugs of the disc not provided with a groove and by having the two ends of the locking member spaced apart when the ring assumes the required diameter for locking together the carrier and disc, the spacing of the two ends being equal to or slightly greater than the circumferential width of a lug. In this way, the two ends of the ring may be disposed one to each side of the lug not having a groove and the two ends of the ring then engage the lug so as to prevent turning movement of the ring.

In a preferred form of this invention, the axial thickness of the lugs of the disc is substantially the same as the axial thickness of the arms of the carrier in the region thereof engaged by the lugs, so as to maintain weight at a minimum. Preferably, the arms project generally radially outwardly from a central region of the carrier. Weight of the assembly may be reduced by machining away material within the arms.

The central part of the carrier may be generally annular, and provided with bores permitting the attachment of the carrier to a wheel hub in a conventional manner, using screw-threaded fasteners. As to the friction surface of the disc itself, that too may be entirely conventional and so provided with various features to assist the braking effect of the assembly, such as grooves in the face of the disc or apertures formed therethrough.

The arrangement of the brake disc assembly may permit a degree of float for the disc, with respect to the carrier. Though it is preferred that the lugs are a close sliding fit in the slots in the carrier, to ensure rotational backlash is minimised, the thickness of the locking member and the width of the grooves in the lugs and in the carrier may be carefully controlled so as to give the required axial float on the disc. To this end, it is highly preferred that the ring has a rectangular cross-sectional shape so that the thickness thereof may be controlled and any minor movement will not lead to rapid wear of the locking member. Further, the grooves and slots respectively in the disc and carrier preferably also are of rectangular cross-section such that wear will be minimised and the float as manufactured may be maintained.

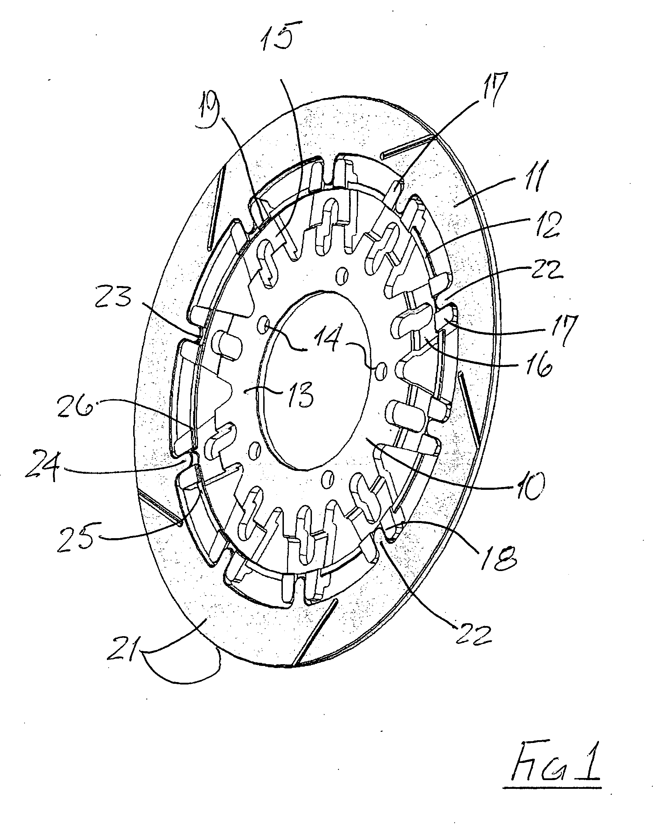

By way of example only, one specific embodiment of brake disc assembly of this invention will now be described in detail, reference being made to the accompanying drawings in which:-
Figure 1 is an isometric view of the brake disc assembly comprising a carrier, disc and locking ring assembled together; and

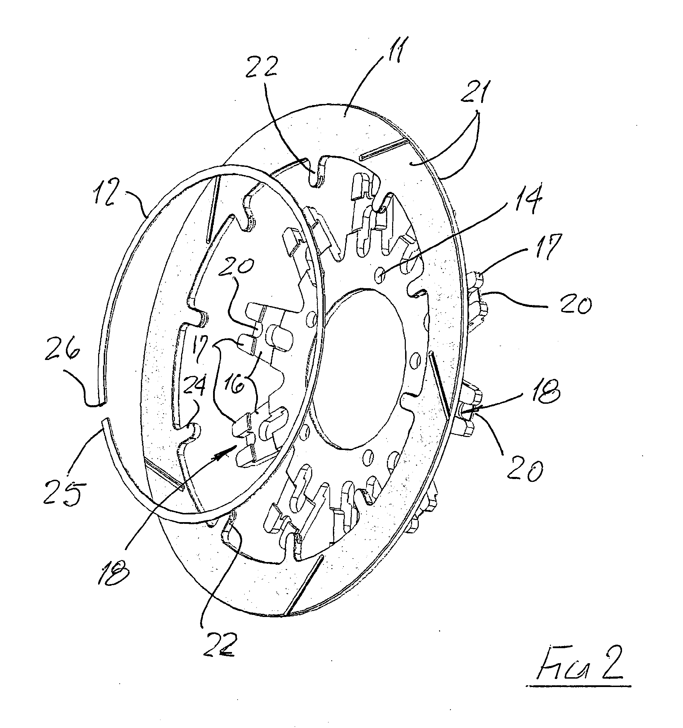

Figure 2 is an isometric view of the assembly of Figure 1, but with the parts separated for clarity.

The embodiment of brake disc assembly comprises a carrier 10, a brake disc 11 and a locking ring 12. The carrier 10 has a central region 13 provided with five mounting holes 14 for accepting bolts by means of which the carrier may be secured to the hub of a motorcycle wheel (not shown), in an entirely conventional manner. In this embodiment, the carrier has ten radially outwardly projecting arms 15, equi-spaced around the carrier. Each arm 15 has a recessed central region 16 and an outer portion 17 formed with a slot 18 through the thickness of the arm and extending radially inwardly from the free end thereof. There is a shoulder at the junction between the recessed central region 16 and the outer portion 17 of each arm, a groove 19 being formed in that shoulder which groove extends in the circular direction and opens inwardly of the carrier into the recess. At the base of each slot 18 and to one side thereof is a web 20, for a purpose to be described below.

The brake disc 11 has opposed annular friction surfaces 21 and a plurality of lugs 22 project radially inwardly from that friction surface. In this embodiment, there are ten such lugs 22, each of which is engageable with a respective slot 18 of the carrier 10. The radially inner ends of nine of the lugs 22 are provided with a respective groove 23 which opens in the radially inward direction, such that when the lugs 22 are received within the slots 18 in the carrier, the respective grooves 19 and 23 in the carrier arms and disc lugs are also in alignment. The tenth disc lug 24 does not have a corresponding groove, for a purpose to be described below. Apertures are formed in the carrier arms as shown to reduce the weight thereof, and so to reduce the un-sprung weight of the brake assembly of a motorcycle.

The locking ring 12 is formed of spring steel and is of such a length that when located in the aligned grooves 19 and 23 of the assembled brake disc and carrier, the two ends 25,26 of the ring are spaced apart by a distance slightly greater than the circumferential width of the tenth lug 24. The ring should be positioned so that those two ends are disposed one on each side of the tenth lug 24. When so disposed, the ring is under spring tension, having been deformed inwardly to reduce its diameter from its relaxed position, such that the resilience of the ring will serve to maintain the ring in engagement with the respective grooves.

The cross-section of the grooves 19 and 23, as well as the cross-section of the ring 12 are all rectangular, in order to maximise the contact area in the radial direction between the ring and grooves. This serves to minimise any wear which might occur between the ring and groove side faces, such that the manufactured dimensions may be maintained for as long as possible.

A small degree of axial float of the disc is accommodated by careful control of the widths of the grooves 19 and 23 and the thickness of the locking ring 12, all in the axial direction. For example, the grooves may be very slightly wider than the thickness of the locking ring, or it may be advantageous to have the locking ring a very close fit in the carrier grooves 19, with the grooves 23 in the brake disc lugs 22 slightly wider so that all of the float is provided between the brake disc lugs and the locking ring. Typically, a float of around 0.25 mm may be provided in this way.

It will be appreciated that it is a relatively easy matter to fit the brake disc 11 to the carrier 10. The disc lugs 22 are rotationally aligned with the slots 18 of the carrier and the disc is then moved axially to bring the grooves 19 and 23 into alignment, until the inner ends of the lugs 22 engage the respective webs 20. One end 25 or 26 of the locking ring is pressed into the carrier slot to one side of the disc tenth lug 24 and is then fed sequentially around all of the aligned carrier and disc grooves 19 and 23 until the other end of the ring lies on the other side of the tenth lug 24, engaged in the carrier slot to the other side of that lug. The webs 20 assist in positioning the disc 11 with respect to the carrier 10 for the fitting of the locking ring. Removal of the disc is performed in exactly the reverse manner, by springing inwardly either end of the locking ring and then gradually pulling in out of all of the aligned grooves until the ring comes free of the carrier and disc, so releasing the disc from the carrier. It will be appreciated that there are gaps between the arms 15 of the carrier, where the locking ring 12 is exposed. This allows easy access to the locking ring, particularly to each side of the tenth lug 24, where the ends of the locking ring are disposed. Thus, either end may be sprung out of the associated carrier groove and then released from all of the other carrier arms and disc lugs, to free the disc.

## Claims

1. A brake disc assembly comprising:
- a carrier (10) for mounting on a wheel and including a plurality of angularly-spaced outwardly-projecting arms (15) each defining from the outer end thereof an inwardly directed slot (18) extending through the arm, each arm being provided with an inwardly-opening part-circular groove (19) intersecting the associated slot;
- an annular brake disc (11) including a plurality of inwardly projecting lugs (22) each receivable in a corresponding slot (18) of the carrier by relative axial movement of the disc and carrier, at least some of the lugs having a lug groove (23) formed in the radially-inwardly facing surface of the lug such that when the lugs of the disc are engaged in the slots of the carrier, each lug groove (23) is aligned with the carrier grooves (19); and
- a circularly-formed split resilient locking member (12) having the two ends thereof (25,26) adjacent each other, which locking member is receivable in the aligned grooves of the carrier and brake disc to hold the disc engaged with the carrier, the locking member being removable from the grooves by inward deformation of the locking member from one end thereof.

2. A brake disc assembly as claimed in claim 1, wherein all but one of the lugs (22) of the disc (11) are provided with a lug groove (23) for alignment with a respective carrier groove (19).

3. A brake disc assembly as claimed in claim 2, wherein the locking member (12) is of such a length that the two ends (25,26) thereof are disposed one to each side of the disc lug not having a disc groove, when the locking member is otherwise disposed in the aligned disc and carrier grooves.

4. A brake disc assembly as claimed in any of the preceding claims, wherein the locking member (12) is formed from a resilient metal and when disposed in the aligned lug and carrier grooves (25,26), the locking member is under spring tension.

5. A brake disc assembly as claimed in any of the preceding claims, wherein the axial thickness of the disc lugs (22) is substantially the same as the axial thickness of the arms (15) of the carrier, in the region thereof engaged by the lugs.

6. A brake disc assembly as claimed in any of the preceding claims, wherein each lug (22) is a close sliding fit within the associated slot (18) in the carrier, in the rotational direction.

7. A brake disc assembly as claimed in any of the preceding claims, wherein the widths of the grooves (19,23) in the lugs (22) and carrier arms (15) and the width of the locking member (12) are selected to give a required degree of axial float to the brake disc (11), with respect to the carrier (10) when held thereto by the locking member.

8. A brake disc assembly as claimed in any of the preceding claims, wherein each carrier arm (15) has a recessed central region (16) and an outer portion (17) formed with said slot, there being a shoulder at the junction between the recessed central region and the outer portion and the carrier groove (19) for each arm is formed in that shoulder.

9. A brake disc assembly as claimed in any of the preceding claims, wherein a web (20) is provided at the inner end of each slot (18) but to one side thereof, to define a datum position for the respective lugs (22) of the brake disc.

10. A disc brake assembly for a motorcycle and including a brake disc assembly as claimed in any of the preceding claims in conjunction with a caliper for friction pads to bear on the brake disc.

## Patentansprüche

1. Ein Bremsscheibenanordnung umfassend:
- einen Träger (10) zum Montieren auf ein Rad, der eine Mehrzahl von winkelbeabstandeten nach außen vorstehenden Armen (15) aufweist, von denen jeder von seinem äußeren Ende einen nach innen weisenden Schlitz (18) definiert, der sich durch den Arm erstreckt, wobei jeder Arm mit einer sich nach innen öffnenden teilkreisförmigen Rille (19) versehen ist, die sich mit den zugehörigen Schlitz überschneidet;
- eine ringförmige Bremsscheibe (11), die eine Mehrzahl von nach Innen vorstehenden Ansätzen (22) umfasst, von denen jeder in einem zugehörigen Schlitz (18) des Trägers durch relative axiale Bewegung der Scheibe und des Trägers aufnehmbar ist, wobei mindestens einige der Ansätze eine Ansatz-Rille (23) aufweisen, die in der radial nach innen weisenden Oberfläche des Ansatzes so gebildet sind, dass, wenn die Ansätze der Scheibe in die Schlitze des Trägers eingreifen, jede Ansatz-Rille (23) mit den Träger-Rillen (19) fluchtet; und
- ein kreisförmig gebildetes geteiltes elastisches Verriegelungselement (12), welches zwei einander gegenüberliegende Enden (25.26) aufweist, welches Verriegelungselement in den fluchtenden Rillen des Trägers und der Bremsenscheibe aufgenommen werden kann, um die Scheibe mit dem Träger eingerastet zu halten, wobei das Verriegelungselement durch Deformation des Verriegelungselements nach innen von einem seiner Enden entfernbar ist.

2. Eine Bremsscheibenanordnung nach Anspruch 1, worin alle bis auf eine der Ansätze (22) der Scheibe (11) mit einer Ansatz-Rille (23) zum Ausrichten mit einer zugehörigen Träger-Rille (19) versehen sind.

3. Eine Bremsscheibenanordnung nach Anspruch 2, worin das Verriegelungselement (12) von einer solchen Länge ist, dass die beiden Enden (25.26) desselben bis zu jeder Seite des Scheiben-Ansatzes angeordnet sind, der nicht eine Scheiben-Rille hat, wenn das Verriegelungselement sonst in der ausgerichteten Scheibe und Träger-Rillen angeordnet ist.

4. Eine Bremsscheibenanordnung nach einem der vorhergehenden Ansprüche, worin das Verriegelungselement (12) aus einem elastischen Metall gebildet ist und worin das Verriegelungselement, wenn in den ausgerichteten Ansatz- und Träger-Rillen (25.26) angeordnet ist, unter Federspannung ist.

5. Eine Bremsscheibenanordnung nach einem der vorhergehenden Ansprüche, worin die axiale Dicke der Scheiben-Ansätze (22) im wesentlichen gleich der axialen Dicke der Arme (15) des Trägers im Bereich derselben sind, die mit den Ansätzen in Eingriff sind.

6. Eine Bremsscheibenanordnung nach einem der vorhergehenden Ansprüche, worin jeder Ansatz (22) in der Drehrichtung ein enger Gleitsitz innerhalb des zugehörigen Schlitzes (18) in dem Träger ist.

7. Eine Bremsscheibenanordnung nach einem der vorhergehenden Ansprüche, worin die Breiten der Nut (19.23) in den Ansätzen (22) und Trägerarmen (15) und die Breite des Verriegelungselements (12) ausgewählt sind, um einen erforderlichen Grad der axialen Hin- und Herbewegung der Bremse Scheibe (11) in Bezug auf die Träger (10), wenn sie daran durch das Verriegelungselement gehalten ist, zu ermöglichen.

8. Eine Bremsscheibenanordnung nach einem der vorhergehenden Ansprüche, worin jeder Trägerarm (15) einen zurückspringenden zentralen Bereich (16) und einen äußeren Abschnitt (17) aufweist, der in dem besagtem Schlitz gebildet ist, wobei eine Schulter am Übergang zwischen dem zurückspringenden zentralen Bereich und dem äußeren Abschnitt und der Träger-Rille (19) für jeden Arm in dieser Schulter ausgebildet ist.

9. Eine Bremsscheibenanordnung nach einem der vorhergehenden Ansprüche, worin ein Steg (20) am inneren Ende jedes Schlitzes (18) aber zu einer Seite derselben vorgesehen ist, um eine Bezugspunkt-Position für die jeweiligen Ansätze (22) der Brems-Scheibe zu definieren.

10. Eine Scheibenbremse für ein Motorrad und umfassend eine Bremsscheibenanordnung , nach einem der vorhergehenden Ansprüche in Verbindung mit einem Bremssattel für Bremsbeläge, der auf der Brems-Scheibe gelagert ist.

## Revendications

1. Ensemble de disque de frein comportant :
- un support (10) pour le montage sur une roue et comprenant une multiplicité de bras dépassant vers l'extérieur et espacés angulairement (15) définissant chacun à partir de son extrémité extérieure une fente orientée vers l'intérieur (18) s'étendant à travers le bras, chaque bras étant pourvu d'une rainure partiellement circulaire s'ouvrant vers l'intérieur (19) qui coupe la fente associée ;
- Ensemble de disque de frein annulaire (11) comprenant une multiplicité de pattes dépassant vers l'intérieur (22) pouvant chacune être reçue dans une fente correspondante (18) du support par un mouvement axial relatif du disque et du support, au moins certaines des pattes ayant une rainure de patte (23) formée dans la surface orientée radialement vers l'intérieur de la patte de telle sorte que, quand les pattes du disque sont engagées dans les fentes de support, chaque rainure de patte (23) est alignée avec les rainures de support (19) ; et
- un élément de blocage élastique fendu de forme circulaire (12) ayant ses deux extrémités (25, 26) adjacentes l'une à l'autre, lequel élément de blocage peut être reçu dans les rainures alignées du support et du disque de frein afin de maintenir le disque engagé avec le support, l'élément de blocage pouvant être enlevé des rainures par déformation vers l'intérieur de l'élément de blocage à partir d'une extrémité.

2. Ensemble de disque de frein selon la revendication 1, dans lequel toutes les pattes (22) sauf une du disque (11) sont pourvues d'une rainure de patte (23) pour l'alignement avec une rainure de support respective (19).

3. Ensemble de disque de frein selon la revendication 2, dans lequel l'élément de blocage (12) est d'une longueur telle que ses deux extrémités (25, 26) sont disposées une de chaque côté de la patte de disque n'ayant pas de rainure de disque, quand l'élément de blocage est disposé par ailleurs dans les rainures alignées de disque et de support.

4. Ensemble de disque de frein selon l'une quelconque des revendications précédentes, dans lequel l'élément de blocage (12) est formé en métal élastique et, quand il est disposé dans les rainures alignées de patte et de support (25, 26), l'élément de blocage est sous une tension de ressort.

5. Ensemble de disque de frein selon l'une quelconque des revendications précédentes, dans lequel l'épaisseur axiale des pattes de disque (22) est sensiblement la même que l'épaisseur axiale des bras (15) du support, dans la zone de celui-ci engagée par les pattes.

6. Ensemble de disque de frein selon l'une quelconque des revendications précédentes, dans lequel chaque patte (22) est en ajustement coulissant serré à l'intérieur de la fente associée (18) dans le support, dans le sens de rotation.

7. Ensemble de disque de frein selon l'une quelconque des revendications précédentes, dans lequel les largeurs des rainures (19, 23) dans les pattes (22) et les bras de support (15) et la largeur de l'élément de blocage (12) sont choisies de façon à donner un degré exigé de flottement axial au disque de frein (11), par rapport au support (10) quand il est maintenu dessus par l'élément de blocage.

8. Ensemble de disque de frein selon l'une quelconque des revendications précédentes, dans lequel chaque bras de support (15) a une zone centrale renfoncée (16) et une partie extérieure (17) formée avec ladite fente, avec un épaulement à la jonction entre la zone centrale renfoncée et la partie extérieure et la rainure de support (19) pour chaque bras est formée dans cet épaulement.

9. Ensemble de disque de frein selon l'une quelconque des revendications précédentes, dans lequel une âme (20) est prévue au niveau de l'extrémité intérieure de chaque fente (18) mais sur un côté de celle-ci, afin de définir une position de référence pour les pattes respectives (22) du disque de frein.

10. Ensemble de frein à disque pour une motocyclette et comprenant un ensemble de disque de frein selon l'une quelconque des revendications précédentes en liaison avec un étrier pour des garnitures de friction qui portent sur le disque de frein.
